# EUROPÄISCHE PATENTANMELDUNG

(11) **EP 3 739 287 A1**
(43) Veröffentlichungstag der Anmeldung: **18.11.2020**
(21) Anmeldenummer: 20164011.7
(22) Anmeldetag: 18.03.2020
(51) Int. Cl.: G01B 11/00, G01B 11/26, G01S 3/782, G01B 5/012

(54) **VERMESSUNGSVORRICHTUNG**

(30) Priorität: 02.05.2019 DE 102019206278
(71) Anmelder: Dr. Johannes Heidenhain GmbH, 83301 Traunreut (DE)
(72) Erfinder: HOLZAPFEL, Wolfgang, 83119 Obing (DE); MEISSNER, Markus, 83236 Übersee (DE); STEPPUTAT, Michael, 83278 Traunstein (DE); KRAUS, Robert, 83308 Trostberg (DE); SCHERER, Manuel, 83278 Traunstein (DE)

(57) **Zusammenfassung**

Die vorliegende Erfindung betrifft eine Vermessungsvorrichtung mit einem im Raum beweglichen Messkopf und einer optischen Positionserfassungseinrichtung zur Bestimmung der räumlichen Position und Orientierung des Messkopfs gegenüber einem Bezugspunkt. Die Positionserfassungseinrichtung umfasst mindestens drei Positionsbestimmungsmodule, die als Sendeeinheit oder als Empfangseinheit ausgebildet sind, wobei mindestens ein Positionsbestimmungsmodul am Messkopf und mindestens ein Positionsbestimmungsmodul am Bezugspunkt angeordnet ist. Eine Sendeeinheit weist mindestens ein Sendeeinheit-Markierungselement auf; eine Empfangseinheit umfasst mindestens einen optoelektronischen Detektor sowie mindestens ein Empfangseinheit-Markierungselement, das in einer definierten räumlichen Beziehung zum optoelektronischen Detektor angeordnet ist. Es bestehen Sichtverbindungen zwischen mindestens einem Teil der Positionsbestimmungsmodule; das mindestens eine Positionsbestimmungsmodul am Messkopf und das mindestens eine Positionsbestimmungsmodul am Bezugspunkt sind durch mindestens eine zusammenhängende Kette von Sichtverbindungen verbunden (Fig. 1).

## Beschreibung

### GEBIET DER TECHNIK

Die vorliegende Erfindung betrifft eine Vermessungsvorrichtung mit einem im Raum beweglichen Messkopf. Die räumliche Position und Orientierung des Messkopfs wird mit Hilfe einer optischen Positionserfassungseinrichtung bestimmt.

### STAND DER TECHNIK

Eine gattungsgemäße Vermessungsvorrichtung ist beispielsweise aus der DE 36 29 689 A1 bekannt. In der darin vorgeschlagenen Vorrichtung wird ein Messkopf, ausgebildet als Taster, mit Hilfe eines Roboterarms im Raum positioniert und ein dreidimensional zu vermessendes Werkstück, mit dem Taster abgetastet. Die räumliche Position und Orientierung des Messkopfs, d.h. dessen Pose, wird von einer optischen Positionserfassungseinrichtung über ein Multilaterationsverfahren bestimmt. Diese umfasst mehrere Laser-Entfernungsmesser, welche die Entfernung zwischen stationären Trägern und Bezugspunkten am Messkopf ermitteln. Aus den ermittelten Entfernungen wird über Triangulationsverfahren die Pose des Messkopfs relativ zu den stationären Trägern bestimmt. In Verbindung mit der bekannten Geometrie des Tasters kann auf diese Art und Weise aus der gemessenen Pose des Messkopfs die räumliche Position des zugehörigen Antastpunkts auf der Werkstück-Oberfläche ermittelt werden. Aus einer Vielzahl derart bestimmter Antastpunkte lässt sich dann die dreidimensionale Form des abgetasteten Werkstücks messtechnisch erfassen.

Eine ähnliche Vorrichtung offenbart die US 4,621,926. Darin ist ein Koordinatenmessgerät gezeigt, das einen als Taster ausgebildeten Messkopf aufweist, der über eine Brückenmechanik im Raum positioniert wird, um ein Werkstück dreidimensional abzutasten. Zur Bestimmung der räumlichen Position und Orientierung des Messkopfs dient hier eine optische Positionserfassungseinrichtung mit drei Lasertrackern.

In Fall dieser Vorrichtungen ist nur dann eine genaue Bestimmung der Pose des Messkopfs gewährleistet, wenn die stationär angeordneten Komponenten der jeweiligen optischen Positionserfassungseinrichtung eine definierte, invariante Position im Raum gegenüber dem jeweiligen MaschinenKoordinatensystem besitzen. Im Fall von thermisch und/oder mechanisch bedingten Verlagerungen der Position dieser Komponenten kann es zu Fehlern bei der Bestimmung der räumlichen Messkopf-Pose mittels der jeweiligen Positionserfassungseinrichtung kommen. Diese Fehler wirken sich dann in dieser Anwendung in Form von Messfehlern bei der dreidimensionalen Vermessung des Werkstücks mit dem Messkopf aus.

Ähnliche Probleme resultieren auch, wenn der Messkopf nicht als Taster ausgebildet ist, sondern z.B. als Kalibrierwerkzeug zum Vermessen einer Maschine.

### ZUSAMMENFASSUNG DER ERFINDUNG

Der vorliegenden Erfindung liegt die Aufgabe zugrunde, eine Vermessungsvorrichtung der eingangs genannten Art dahingehend zu verbessern, dass Messfehler bei der Bestimmung der Messkopf-Pose verringert werden, die durch thermisch und/oder mechanisch bedingte Verlagerungen der Position von vermeintlich zueinander stationären Komponenten der optischen Positionserfassungseinrichtung verursacht werden.

Diese Aufgabe wird erfindungsgemäß durch eine Vermessungsvorrichtung mit den Merkmalen des Anspruchs 1 gelöst.

Vorteilhafte Ausführungen der erfindungsgemäßen Vermessungsvorrichtung ergeben sich aus den Maßnahmen, die in den abhängigen Ansprüchen aufgeführt sind.

Die erfindungsgemäße Vermessungsvorrichtung weist einen im Raum beweglichen Messkopf und eine optische Positionserfassungseinrichtung zur Bestimmung der räumlichen Position und Orientierung des Messkopfs gegenüber einem Bezugspunkt auf. Die Positionserfassungseinrichtung umfasst mindestens drei Positionsbestimmungsmodule, die als Sendeeinheit oder als Empfangseinheit ausgebildet sind, wobei mindestens ein Positionsbestimmungsmodul am Messkopf und mindestens ein Positionsbestimmungsmodul am Bezugspunkt angeordnet ist; mindestens ein Positionsbestimmungsmodul ist als Empfangseinheit ausgebildet. Eine Sendeeinheit weist mindestens ein Sendeeinheit-Markierungselement auf. Eine Empfangseinheit umfasst mindestens einen optoelektronischen Detektor sowie mindestens ein Empfangseinheit-Markierungselement, das in einer definierten räumlichen Beziehung zum optoelektronischen Detektor angeordnet ist. Es bestehen Sichtverbindungen zwischen mindestens einem Teil der Positionsbestimmungsmodule. Das mindestens eine Positionsbestimmungsmodul am Messkopf und das mindestens eine Positionsbestimmungsmodul am Bezugspunkt sind durch mindestens eine zusammenhängende Kette von Sichtverbindungen verbunden.

Vorzugsweise existieren mindestens zwei zusammenhängende Ketten von Sichtverbindungen zwischen dem mindestens einen Positionsbestimmungsmodul am Messkopf und dem mindestens einen Positionsbestimmungsmodul am Bezugspunkt, wobei diese Ketten von Sichtverbindungen durch mindestens eine Sichtverbindung miteinander verbunden sind, die zwischen Positionsbestimmungsmodulen vorliegt, die jeweils zwischen dem Messkopf und dem Bezugspunkt angeordnet sind.

Es ist möglich, dass nur in einem ersten Teil des Messbereichs der Vermessungsvorrichtung mehr als zwei zusammenhängende Ketten von Sichtverbindungen vorliegen und in weiteren zweiten Teilen des Messbereichs jeweils nur eine zusammenhängende Kette von Sichtverbindungen vorliegt.

In einer vorteilhaften Ausführungsform ist vorgesehen, dass die optoelektronischen Detektoren der Empfangseinheiten mit dem mindestens einen Empfangseinheit-Markierungselement über einen Trägerrahmen thermisch und/oder mechanisch invariant verbunden sind.

Desweiteren kann dem optoelektronischen Detektor in den Empfangseinheiten jeweils mindestens ein Abtastgitter vorgeordnet sein.

Ferner ist möglich, dass das mindestens eine Sendeeinheit-Markierungselement und/oder das mindestens eine Empfangseinheit-Markierungselement identifizierbar ausgebildet sind.

Hierbei kann vorgesehen sein, dass das mindestens eine Sendeeinheit-Markierungselement und/oder das mindestens eine Empfangseinheit-Markierungselement als Lichtquellen ausgebildet sind.

Es ist zudem möglich, dass die Lichtquellen zur Identifikation über eine Steuer- und Auswerteeinrichtung zeitlich selektiv aktivierbar sind.

Desweiteren kann eine Steuer- und Auswerteeinrichtung dazu ausgebildet und eingerichtet sein, aus der Lage eines auf dem optoelektronischen Detektor einer Empfangseinheit resultierenden Streifenmusters die Winkellage einer gemessenen Lichtquelle relativ zur Empfangseinheit zu bestimmen, so dass über die Identifikation des mindestens einen Sendeeinheit-Markierungselements und/oder des mindestens einen Empfangseinheit-Markierungselements die räumliche Pose des Messkopfs sowie mindestens zweier Positionsbestimmungsmodule relativ zum Bezugspunkt bestimmbar ist.

Ferner ist möglich, dass eine Steuer- und Auswerteeinrichtung dazu ausgebildet und eingerichtet ist, sowohl die räumliche Pose des Messkopfs als auch die räumlichen Posen der Positionsbestimmungsmodule zueinander zu bestimmen.

In vorteilhaften Ausführungsform kann vorgesehen sein,
- dass jede Sendeeinheit mindestens drei Sendeeinheit-Markierungselemente umfasst und
- dass jede Empfangseinheit mindestens drei Empfangseinheit-Markierungselemente umfasst.

Es ist möglich, dass eine Werkzeugmaschine eine erfindungsgemäße Vermessungsvorrichtung aufweist, wobei
- der Messkopf in einer Werkzeugaufnahme der Werkzeugmaschine angeordnet ist, wobei mit dem Messkopf ein auf einem Werkstücktisch der Werkzeugmaschine angeordnetes Werkstück vermessbar ist und
- mindestens ein Positionsbestimmungsmodul am Maschinenrahmen der Werkzeugmaschine oder am Werkstücktisch angeordnet ist.

Hierbei kann der Messkopf als Taster ausgebildet sein.

Desweiteren ist möglich, dass am Werkstücktisch ein Positionsbestimmungsmodul angeordnet ist, das als Sendeeinheit mit mindestens drei identifizierbaren Sendeeinheit-Markierungselementen ausgebildet ist.

Ferner ist möglich, dass eine Werkzeugmaschine eine erfindungsgemäße Vermessungsvorrichtung aufweist, wobei
- der Messkopf an einem Endeffektor einer Maschinenkinematik angeordnet ist, wobei mit dem Messkopf die Abweichung der tatsächlichen Position des Endeffektors zur eingestellten Sollposition vermessbar ist und
- mindestens ein Positionsbestimmungsmodul am Maschinenrahmen der Maschine oder an einem Werkstücktisch angeordnet ist.

Über die erfindungsgemäßen Maßnahmen kann nunmehr auch im Fall thermisch und/oder mechanisch bedingter Verlagerungen der Pose vermeintlich stationärer Komponenten der optischen Positionserfassungseinrichtung, wie z.B. der Empfangseinheiten zueinander, eine korrekte Bestimmung der räumlichen Position des Messkopfs gewährleistet werden. Eventuell resultierende Messfehler bei der dreidimensionalen Vermessung von Werkstücken mit dem Messkopf, bei der Vermessung der Positionierfehler der Maschinenkinematik oder bei sonstigen Messaufgaben können auf diese Art und Weise vermieden werden. Zur messtechnischen Erfassung derartiger Verlagerungen ist insbesondere keine zusätzliche Sensorik erforderlich.

Weitere Einzelheiten und Vorteile der vorliegenden Erfindung seien anhand der nachfolgenden Beschreibung von Ausführungsbeispielen der erfindungsgemäßen Vorrichtung in Verbindung mit den Figuren erläutert.

### KURZE BESCHREIBUNG DER ZEICHNUNGEN

Es zeigt
- Figur 1: eine stark schematisierte Darstellung eines ersten Ausführungsbeispiels der erfindungsgemäßen Vermessungsvorrichtung, integriert in eine Werkzeugmaschine mit einer Roboterkinematik;
- Figur 2a: eine Draufsicht auf eine Empfangseinheit aus dem Ausführungsbeispiel der Figur 1;
- Figur 2b: eine seitliche Schnittansicht der Empfangseinheit aus Figur 2a;
- Figur 2c, 2d: jeweils eine korrespondierende Ansicht zu den Figuren 2a, 2b zur Veranschaulichung der verschiedenen Lichtquellen-Emissionswinkel;
- Figur 3: eine schematische Darstellung zur weiteren Erläuterung der Arbeitsweise der erfindungsgemäßen Vermessungsvorrichtung;
- Figur 4: eine stark schematisierte Darstellung eines zweiten Ausführungsbeispiels der erfindungsgemäßen Vermessungsvorrichtung.

### BESCHREIBUNG DER AUSFÜHRUNGSFORMEN

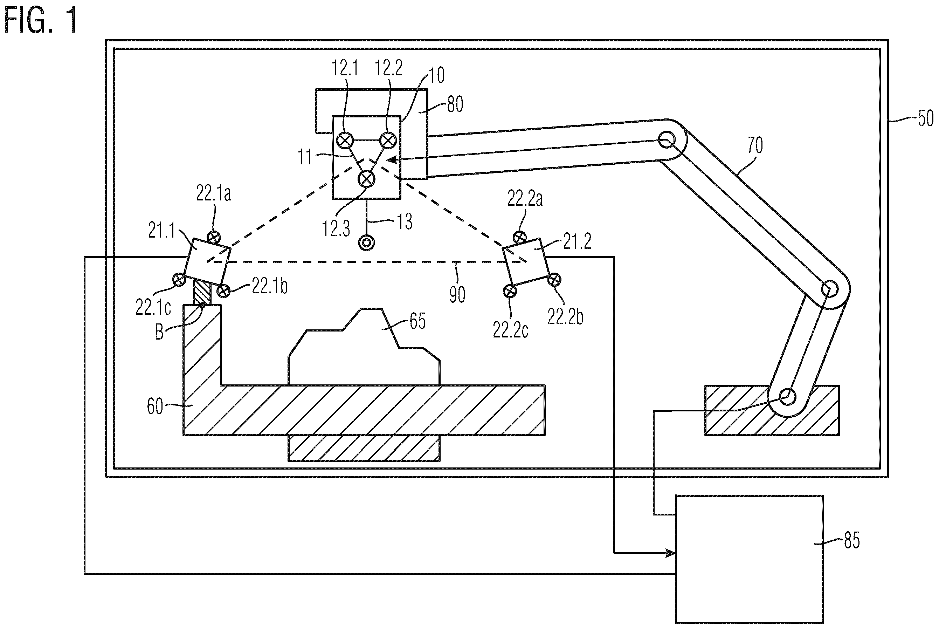

Ein erstes Ausführungsbeispiel der erfindungsgemäßen Vermessungsvorrichtung sei nachfolgend anhand der Figuren 1 - 3 erläutert.

Die erfindungsgemäße Vermessungsvorrichtung ist in diesem Beispiel in eine Werkzeugmaschine integriert, die in Figur 1 nur stark schematisiert angedeutet ist. Von der Werkzeugmaschine ist hierbei lediglich ein Maschinenrahmen 50, ein Werkstücktisch 60 mit einem darauf angeordneten Werkstück 65 sowie eine Kinematik 70 zur räumlichen Positionierung einer Werkzeugaufnahme 80 mit einem Messkopf 10 im Bearbeitungsraum angedeutet. Die in der Figur schematisch dargestellte Kinematik 70 kann z.B. als Roboterkinematik oder als bekannte Mehrachs-Kinematik ausgebildet sein und die Positionierung der Werkzeugaufnahme 80 entlang dreier orthogonaler Bewegungsachsen sowie ggf. um ein oder mehrere zusätzliche rotatorische Achsen ermöglichen. Darüber hinaus sind grundsätzlich auch weitere Kinematiken zur räumlichen Positionierung des Messkopfs 10 relativ zum Werkstücktisch 60 in Verbindung mit der erfindungsgemäßen Vorrichtung einsetzbar.

Zur erfindungsgemäßen Vermessungsvorrichtung gehört der Messkopf 10, der in diesem Ausführungsbeispiel in der Werkzeugaufnahme 80 der Werkzeugmaschine angeordnet und über die Kinematik 70 im Raum beweglich ist. Als Messkopf 10 ist hier ein im Bearbeitungsraum der Werkzeugmaschine räumlich positionierbarer, schaltender Taster vorgesehen, mit dem ein auf dem Werkstücktisch 60 aufgespanntes Werkstück 65 durch taktiles Abtasten mittels eines Taststifts 13 vermessen werden kann. Alternativ hierzu kann der im Raum über die Kinematik 70 positionierbare Messkopf 10 selbstverständlich auch als messender Taster, als optischer Taster, als kapazitiver Entfernungssensor, als Kalibrierwerkzeug etc. ausgebildet sein. Der Messkopf 10 muss demzufolge in der erfindungsgemäßen Vermessungsvorrichtung nicht zwingend zur Erfassung der Kontur eines Werkstücks 65 dienen, sondern kann auch in Verbindung mit vielfältigen andere Messaufgaben eingesetzt werden, z.B. auch zur Vermessung der Positionierfehler der jeweiligen Kinematik 70. Generell handelt es sich beim Messkopf 10 demnach um ein Bauteil, das über eine Maschinen-Kinematik im Raum positionierbar ist. Am Messkopf 10 kann je nach konkreter Ausgestaltung und Messaufgabe unterschiedlichste Sensorik angeordnet sein.

Weiterhin gehört zur erfindungsgemäßen Vermessungsvorrichtung eine optische Positionserfassungseinrichtung, die zur Bestimmung der räumlichen Position und Orientierung des Messkopfs 10 gegenüber einem Bezugspunkt B dient; nachfolgend sei diesbezüglich auch von der Pose des Messkopfs 10 die Rede. Der Bezugspunkt B bzw. das Bezugssystem gegenüber dem die Messkopf-Pose bestimmt wird, kann anwendungsabhängig festgelegt werden. Es kann sich hierbei z.B. um einen definierten Punkt am Maschinenrahmen 50 handeln oder aber - wie im vorliegenden Beispiel - um einen Punkt am Werkstücktisch 60, auf dem das Werkstück 65 aufgespannt ist.

Die Positionserfassungseinrichtung besteht im vorliegenden Ausführungsbeispiel aus mehreren räumlichen 2D-Winkelmesssysteme, wie sie z.B. aus der Druckschrift WO 01/38828 A1 grundsätzlich bekannt sind. Auf den Offenbarungsgehalt dieser Druckschrift und die darin enthaltenen Informationen zu Details geeigneter 2D-Winkelmesssysteme wird hiermit ausdrücklich Bezug genommen.

Die Positionserfassungseinrichtung umfasst mindestens drei Positionsbestimmungsmodule, die entweder als Sendeeinheit oder als Empfangseinheit ausgebildet sind. Mindestens ein Positionsbestimmungsmodul ist hierbei am Messkopf 10 angeordnet und mindestens ein Positionsbestimmungsmodul am Bezugspunkt B. Mindestens ein Positionsbestimmungsmodul der Positionserfassungseinrichtung ist als Empfangseinheit ausgebildet.

Im dargestellten Ausführungsbeispiel der Figur 1 ist ein Positionsbestimmungsmodul als eine am Messkopf 10 angeordnete Sendeinheit 11 ausgebildet. Diese weist hier mehrere Sendeeinheit-Markierungselemente 12.1, 12.2, 12.3 auf, die in einer definierten räumlichen Beziehung zueinander angeordnet und identifizierbar ausgebildet sind. Je nach Messaufgabe, Anzahl und Anordnung der Positionsbestimmungsmodule kann im Unterschied hierzu ggf. auch ein einziges Sendeeinheit-Markierungselement ausreichend sein. Im vorliegenden Ausführungsbeispiel sind als Sendeeinheit-Markierungselemente 12.1, 12.2, 12.3 drei Lichtquellen in einer Dreiecksanordnung vorgesehen. Geeignete Lichtquellen können z.B. als LED ausgebildet sein, zur Identifikation der einzelnen Lichtquellen ist in diesem Beispiel eine zeitlich selektive Aktivierung derselben mit Hilfe einer Steuer- und Auswerteeinrichtung 85 vorgesehen. Alternativ hierzu kann eine Identifikation der als Lichtquellen ausgebildeten Sendeeinheit-Markierungselemente 12.1, 12.2, 12.3 auch anderweitig erfolgen, z.B. indem Lichtquellen mit verschiedenen Emissions-Wellenlängen verwendet werden usw..

Ferner gehören im dargestellten ersten Ausführungsbeispiel, das eine Minimalkonfiguration der erfindungsgemäßen Vorrichtung repräsentiert, neben der Sendeeinheit 11 zwei Positionsbestimmungsmodule zur Positionserfassungseinrichtung, die als Empfangseinheiten 21.1, 21.2 ausgebildet sind. Den Empfangseinheiten 21.1, 21.2 ist jeweils mindestens ein Empfangseinheit-Markierungselement zugeordnet; bevorzugt sind wie im dargestellten Beispiel drei Empfangseinheit-Markierungselemente 22.1a, 22.1b, 22.1c, 22.2a, 22.2b, 22.2c vorgesehen. Eine erste Empfangseinheit 21.1 ist hierbei am Werkstücktisch 60 angeordnet und starr mit diesem und damit auch starr mit dem Werkstück 65 verbunden. Die erste Empfangseinheit 21.1 stellt in diesem Ausführungsbeispiel somit dasjenige Positionsbestimmungsmodul dar, das starr am Bezugspunkt B bzw. Bezugssystem angeordnet ist. Eine zweite Empfangseinheit 21.2 kann demgegenüber an einer beliebigen Position angeordnet werden, solange die nachfolgend noch erläuterten Bedingungen in Bezug auf die erforderlichen Sichtverbindungen mit anderen Komponenten der Positionserfassungseinrichtung erfüllt sind. Grundsätzlich wäre hierbei auch möglich, dass die zweite Empfangseinheit 21.2 am Maschinenrahmen 50 angeordnet wird.

Grundsätzlich ist bei der Verwendung von lediglich zwei Empfangseinheiten sicherzustellen, dass mindestens eine der beiden Empfangseinheiten starr am maßgeblichen Bezugssystem angeordnet bzw. starr mit dem Bezugspunkt B der jeweiligen Applikation verbunden ist. Im Falle einer Werkstückvermessung stellt das Bezugssystem in der Regel der Werkstücktisch 60 dar, auf dem das Werkstück 65 fest angebracht ist. Im Falle der Vermessung der jeweiligen Kinematik durch die beschriebene Positionserfassungseinrichtung kann als Bezugssystem alternativ auch ein geeignet gewähltes Maschinenkoordinatensystem am Maschinenrahmen 50 oder am Werkstücktisch 65 fungieren.

Die beiden Empfangseinheiten 21.1, 21.2 bzw. Positionsbestimmungsmodule sind in direkter Sichtverbindung bzw. Sichtlinie zueinander angeordnet, wobei die verschiedenen Sichtlinien in Figur 1 strichliniert angedeutet sind. In der Praxis erstrecken sich entlang bzw. parallel zu den verschiedenen Sichtlinien jeweils mehrere Mess-Strahlengänge für optische Messungen der 2D-Winkelmesssysteme der Positionserfassungseinrichtung. Aus Gründen der besseren Übersichtlichkeit wird in Figur 1 auf die Darstellung der einzelnen Mess-Strahlengänge entlang der Sichtlinien verzichtet.

Von einer bestehenden Sichtverbindung zwischen zwei Empfangseinheiten 21.1, 21.2 wird hierbei gesprochen, wenn von mindestens einer der beiden Empfangseinheiten 21.1, 21.2 zu mindestens einem Empfangseinheit-Markierungselement, bevorzugt zu mindestens drei Empfangseinheit-Markierungselementen 22.1a, 22.1b, 22.1c, 22.2a, 22.2b, 22.2c, der anderen Empfangseinheit 21.1, 21.2 ununterbrochene Sichtlinien bestehen und damit gültige Messwerte bestimmt werden können. Analog hierzu besteht eine Sichtverbindung zwischen einer Empfangseinheit 21.1, 21.2 und der Sendeeinheit 11, wenn von mindestens einem Sendeeinheit-Markierungselement, bevorzugt von mindestens drei Sendeeinheit-Markierungselementen 12.1, 12.2, 12.3, ununterbrochene Sichtlinien zu der Empfangseinheit 21.1, 21.2 bestehen.

Generell ist in der erfindungsgemäßen Vermessungsvorrichtung erforderlich, dass Sichtverbindungen zwischen mindestens einem Teil der Positionsbestimmungsmodule der Positionserfassungseinrichtung bestehen. Das mindestens eine Positionsbestimmungsmodul am Messkopf 10 und das mindestens eine Positionsbestimmungsmodul am Bezugspunkt B sind hierbei durch mindestens eine zusammenhängende Kette von Sichtverbindungen miteinander verbunden.

Im Ausführungsbeispiel der Figur 1 wird ein derartige zusammenhängende Kette durch die Sichtverbindung zwischen der ersten Empfangseinheit 21.1 und der Sendeeinheit 11 gebildet. Eine weitere zusammenhängende Sichtverbindungs-Kette umfasst die Sichtverbindungen zwischen der ersten Empfangseinheit 21.1 und der zweiten Empfangseinheit 21.2 sowie zwischen der zweiten Empfangseinheit 21.2 und der Sendeeinheit.

Es existieren hier somit zwei zusammenhängende Ketten von Sichtverbindungen zwischen dem mindestens einen Positionsbestimmungsmodul am Messkopf 10 und dem mindestens einen Positionsbestimmungsmodul am Bezugspunkt B.

In einem Sonderfall kann zudem vorgesehen sein, dass nur in einem ersten Teil des Messbereichs der erfindungsgemäßen Vermessungsvorrichtung zwei oder mehr zusammenhängende Ketten von Sichtverbindungen vorliegen und in weiteren zweiten Teilen des Messbereichs jeweils nur eine zusammenhängende Kette von Sichtverbindungen vorliegt. Beispielsweise kann sich dieser Fall ergeben, wenn in einem Teil des Messbereichs Sichtverbindungen unterbrochen werden, welche in anderen Bereichen vorliegen; Ursache hierfür können etwa Abschattungen in einem Teil des Messbereichs sein.

Im dargestellten Beispiel der Figur 1 erfolgt die Anordnung der Empfangseinheiten 21.1, 21.2 in der Werkzeugmaschine über das vorgenannte Minimalerfordernis hinausgehend derart, dass die mindestens zwei zusammenhängenden Ketten von Sichtverbindungen zwischen der Sendeeinheit 11 und dem Messkopf 10 ein geschlossenes Netz bilden, welches alle Empfangseinheiten 21.1, 21.2 und die Sendeeinheit 11 untereinander verbindet; dieses Netz bzw. die entsprechenden Sichtverbindungen werden im Messbetrieb möglichst nicht unterbrochen. Über ein derartiges geschlossenes Netz von Sichtverbindungen kann eine nochmals höhere Genauigkeit bei der Bestimmung der Messkopf-Pose erreicht werden. Ein geschlossenes Netz aus Sichtverbindungen zeichnet sich dabei dadurch aus, dass mindestens zwei Empfangseinheiten 21.1, 21.2 mit Sichtverbindung zur Sendeeinheit 11 jeweils eine Sichtverbindung zu mindestens einer anderen Empfangseinheit 21.1, 21.2 besitzen, welche eine Sichtverbindung zum Messkopf 10 hat. Jede Empfangseinheit 21.1, 21.2 mit einer Sichtverbindung zum Messkopf 10 besitzt damit eine Sichtverbindung zu mindestens einer anderen Empfangseinheit 21.1, 21.2. Das entsprechende Netz aus Sichtverbindungen ist in Figur 1 mit dem Bezugszeichen 90 versehen. Wie aus der Darstellung ersichtlich, umfasst das Netz 90 hier die Sichtlinie bzw. Sichtverbindung zwischen den beiden Empfangseinheiten 21.1, 21.2 sowie die Sichtlinien zwischen der Sendeeinheit 10 und den beiden Empfangseinheiten 21.1, 21.2. Selbstverständlich ist es möglich, dass alternativ zur in Figur 1 gezeigten Minimalkonfiguration der erfindungsgemäßen Vorrichtung auch mehr als zwei Empfangseinheiten 21.1, 21.2 vorgesehen werden, dementsprechend mehr Sichtlinien umfasst dann das aufgespannte Netz.

Pro Empfangseinheit 21.1, 21.2 sind jeweils mindestens ein - nicht in Figur 1 erkennbarer - Detektor und mindestens ein identifizierbares Empfangseinheit-Markierungselement, bevorzugt wie im dargestellten Ausführungsbeispiel drei Empfangseinheit-Markierungselemente 22.1a, 22.1b, 22.1c, 22.2a, 22.2b, 22.2c, vorgesehen, die in einer definierten räumlichen Beziehung zum Detektor der jeweiligen Empfangseinheit 21.1, 21.2 angeordnet sind. Die Empfangseinheit-Markierungselemente 22.1a, 22.1b, 22.1c, 22.2a, 22.2b, 22.2c sind in diesem Beispiel analog zu den Sendeeinheit-Markierungselementen 12.1, 12.2, 12.3 als identifizierbare Lichtquellen bzw. LEDs ausgebildet. Zur Identifikation der einzelnen Lichtquellen ist beispielhaft ebenfalls eine zeitlich selektive Aktivierung derselben mit Hilfe der Steuer- und Auswerteeinrichtung 85 vorgesehen. Auch bezüglich der Empfangseinheit-Markierungselemente 22.1a, 22.1b, 22.1c, 22.2a, 22.2b, 22.2c kann in der erfindungsgemäßen Vorrichtung natürlich eine alternative Identifikation vorgesehen sein.

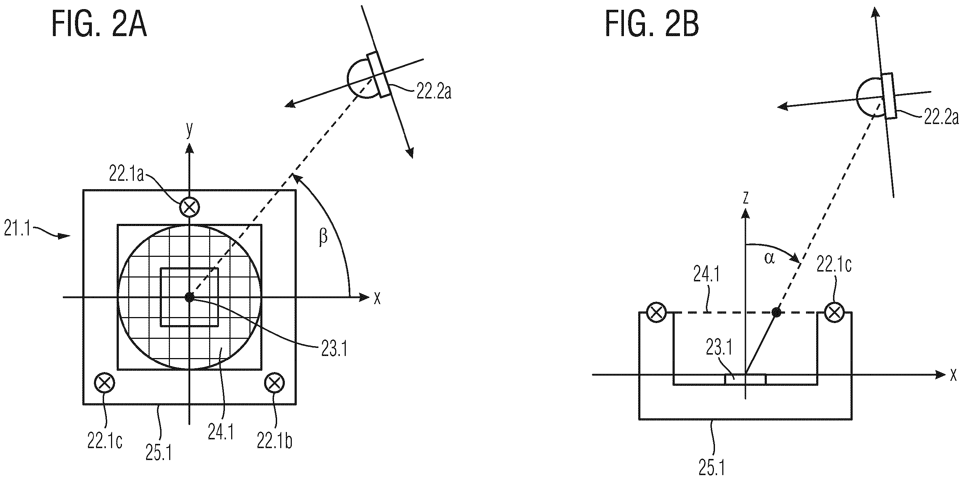

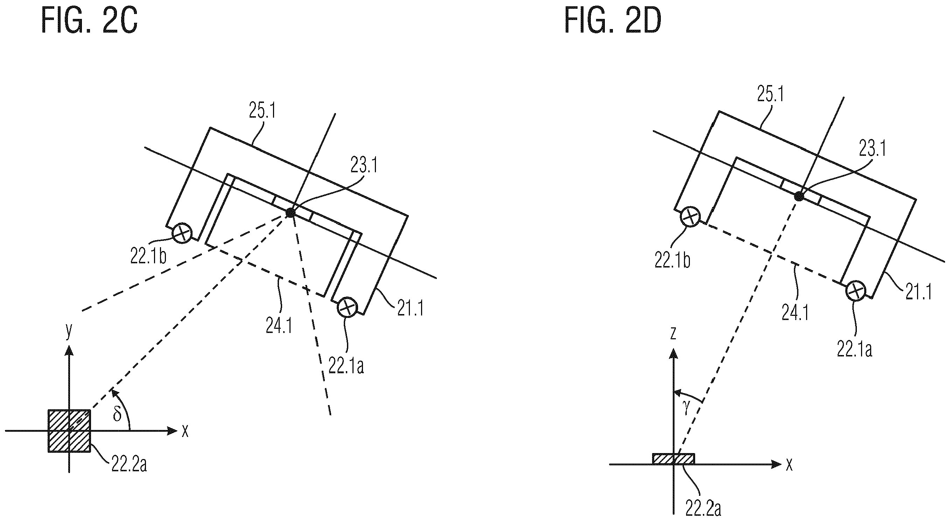

In den Figuren 2a und 2b ist eine der beiden Empfangseinheiten 21.1 aus dem Beispiel der Figur 1 in einer Draufsicht sowie in einer seitlichen Schnittansicht in Verbindung mit einem Empfangseinheit-Markierungselement 22.2a der anderen Empfangseinheit 21.2 gezeigt; anhand dieser Darstellungen sei nachfolgend u.a. der grundsätzliche Aufbau der als Empfangseinheiten 21.1, 21.2 ausgebildeten Positionsbestimmungsmodule der Positionserfassungseinrichtung erläutert. Als Detektor 23.1 fungiert in der in Figur 2a und 2b gezeigten Empfangseinheit 21.1 ein optoelektronischer Detektor in Form eines sogenannten strukturierten Photodetektors. Dieser weist eine Vielzahl periodisch angeordneter, lichtempfindlicher Detektorelemente in einer Detektionsebene auf. Der Detektor 23.1 ist wie aus Figur 2b ersichtlich auf dem Bodenteil im Inneren eines wannenförmigen Trägerrahmens 25.1 angeordnet. Die strahlungsempfindliche Fläche des Detektors 23.1 ist nach oben, also in Richtung der Öffnung des Trägerrahmens 25.1 orientiert. Dem Detektor 23.1 bzw. dessen strahlungsempfindlicher Fläche ist ein Abtastgitter 24.1 vorgeordnet, das als periodisches Transmissions-Gitter ausgebildet ist. Die Empfangseinheit-Markierungselemente 22.1a - 22.1c sind über den Trägerrahmen 25.1 mit dem Detektor 23.1 starr verbunden.

Mit Hilfe des optoelektronischen Detektors 23.1 wird ein in der Detektionsebene resultierendes periodisches Streifenmuster detektiert. Dieses entsteht aus der Wechselwirkung der von einem Markierungselement emittierten Strahlenbündel mit dem Abtastgitter 24.1. Das entsprechende Strahlenbündel kann hierbei von einem der Sendeeinheit-Markierungselemente 12.1, 12.2, 12.3 der Sendeeinheit 11 oder aber wie in den Figuren 2a - 2d gezeigt von einem der Empfangseinheit-Markierungselemente 22.2a einer anderen Empfangseinheit 21.2 stammen. In den Figuren 2a - 2d ist exemplarisch jeweils nur ein einziges Empfangseinheit-Markierungselement 22.2a gezeigt, das an der zweiten Empfangseinheit 21.2 angeordnet ist. Die Lage des auf diese Art und Weise erzeugten Streifenmusters auf dem Detektor 23.1 hängt von der Einfallsrichtung der Strahlung des gemessenen Markierungselements 22.2a relativ zur jeweiligen Empfangseinheit 21.1 ab. Bevorzugt ist das Abtastgitter 24.1 der Empfangseinheit 21.1 als zweidimensionales Kreuzgitter und der optoelektronische Detektor 23.1 als zweidimensionaler Detektor ausgeführt. Derart können aus der Lage des erzeugten zweidimensionalen Streifenmusters auf dem Detektor 23.1 zwei Einfallswinkel bestimmt werden, welche zu den Hauptrichtungen des zweidimensionalen Abtastgitters 24.1 ausgerichtet sind. Das heißt, über die Auswertung der Streifenmusterlage auf dem Detektor 23.1 kann messtechnisch für die entsprechende Empfangseinheit 21.1 die Einfallsrichtung des vom jeweiligen Markierungselement 22.2a kommenden Lichtstrahls bzw. die Winkellage der gemessenen Lichtquelle erfasst werden. Aus diesem Grund wird im Zusammenhang mit der entsprechenden Positionserfassungseinrichtung auch von einem räumlichen 2D-Winkelmesssystem gesprochen. Im Hinblick auf weitere Details zum optischen Wirkungsprinzip der eingesetzten Positionserfassungseinrichtung sei nochmals auf die vorstehend erwähnte WO 01/38828 A1 verwiesen.

Mit jedem 2D-Winkelmesssystem der Positionserfassungseinrichtung ist es somit grundsätzlich möglich, die zwei Empfangswinkel α, β des optischen Strahls zu bestimmen, welcher die jeweilige Empfangseinheit 21.1, 21.2 mit dem aktiven Markierungselement am Messkopf 10 oder an einer anderen Empfangseinheit 21.1, 21.2 verbindet. Die Empfangswinkel α, β werden hierbei relativ zum Abtastgitter 24.1 der jeweiligen Empfangseinheit 21.1, 21.2 bestimmt und entsprechen in etwa den Winkeln α, β der Sichtlinie, welche von der Empfangseinheit 21.1, 21.2 auf das jeweilige Markierungselement 12.1 - 12.3, 22.1a - 22.1c, 22.2a - 22.2c zeigt.

Zur Bestimmung der Messkopf-Pose würde im Fall der räumlich invarianten Anordnung der Empfangseinheiten 21.1, 21.2 grundsätzlich ausreichen, wenn im Messbetrieb die einzelnen Sendeeinheit-Markierungselemente 12.1 - 12.3 zur Identifikation mit Hilfe der Steuer- und Auswerteeinrichtung 85 sequentiell aktiviert und für jedes aktivierte Sendeeinheit-Markierungselement 12.1 - 12.3 die jeweils zwei Winkelmesswerte für alle Empfangseinheiten 21.1, 21.2, welche das Licht des aktiven Markierungselements empfangen können, und dem aktiven Markierungselement bestimmt werden. Aufgrund der bekannten geometrischen Anordnung der Sendeeinheit 11 bzw. der Sendeeinheit-Markierungselemente 12.1 - 12.3 am Messkopf 10 wäre auf diese Art und Weise die Bestimmung der räumlichen Position und Orientierung des Messkopfs 10 bzw. dessen Pose in Bezug auf den Maschinenrahmen 50 grundsätzlich möglich.

Um eine möglichst hohe Genauigkeit bei einer derartigen Positionsbestimmung sicherzustellen, ist es grundsätzlich vorteilhaft, wenn das Werkstück 65 starr mit dem Werkstücktisch 60 verbunden ist und darüber hinaus die Position der Empfangseinheiten 21.1, 21.2 relativ zueinander und zum Werkstücktisch 60 möglichst exakt bekannt ist und sich zeitlich nicht ändert. In diesem Fall kann auf eine Erfassung der Bewegung des Werkstücktisches 60 verzichtet werden.

Abhängig von der jeweiligen Maschinenkinematik kann dies aber nicht für alle Gegebenheiten gewährleistet werden. So kann es etwa aufgrund von Schwingungen des Maschinenrahmens 50 und/oder thermischen Einflüssen zu undefinierten Relativbewegungen der Empfangseinheiten 21.1, 21.2 zueinander und damit gegenüber dem Werkstücktisch 60 und dem darauf angeordneten Werkstück 65 kommen. Dies wiederum hat dann Ungenauigkeiten bei der Bestimmung der Messkopf-Pose relativ zum Werkstücktisch 60 bzw. zum Bezugspunkt zur Folge.

Aus diesem Grund ist gemäß der vorliegenden Erfindung vorgesehen, dass eventuelle räumliche Verlagerungen der Empfangseinheiten 21.1, 21.2 zueinander während des Messbetriebs messtechnisch erfasst und die entsprechenden Verlagerungen bei der Bestimmung der Messkopf-Pose berücksichtigt werden. Zu diesem Zweck ist den - vermeintlich stationären bzw. räumlich invarianten - Empfangseinheiten 21.1, 21.2 jeweils mindestens ein, bevorzugt drei Empfangseinheit-Markierungselemente 22.1a, 22.1b, 22.1c, 22.2a, 22.2b, 22.2c zugeordnet, die sich jeweils in einer definierten Relativposition zum Detektor der entsprechenden Empfangseinheit 21.1, 21.2 befinden. Im dargestellten Ausführungsbeispiel ist die Anordnung von insgesamt drei Empfangseinheit-Markierungselementen 22.1a - 22.1c, 22.2a - 22.2c pro Empfangseinheit 21.1, 21.2 vorgesehen, die zentriert um den Mittelpunkt des Detektors 23.1 platziert werden. Selbstverständlich kann demgegenüber auch eine andere räumliche Anordnung der jeweils mindestens drei Empfangseinheit-Markierungselemente 22.1a - 22.1c, 22.2a - 22.2c vorgesehen werden, z.B. eine L-förmige Anordnung. Wichtig ist in Bezug auf die räumliche Anordnung der Empfangseinheit-Markierungselemente 22.1a - 22.1c, 22.2a - 22.2c lediglich, dass eine definierte Relativposition zum Detektor 23.1 existiert. Um diese definierte Relativposition der Empfangseinheit-Markierungselemente 22.1a - 22.1c, 22.2a - 22.2c zum Detektor 23.1 zu gewährleisten, sind die Empfangseinheit-Markierungselemente 22.1a - 22.1c, 22.2a - 22.2c über den Trägerrahmen 25.1 mit dem Detektor 23.1 verbunden, wobei der Trägerrahmen 25.1 bevorzugt thermisch und/oder mechanisch invariant ausgebildet ist. Besonders vorteilhaft erweist sich hierbei, wenn der Trägerrahmen 25.1 aus einem Material wie Invar, Zerodur oder Carbon ausgebildet ist, welches die geforderten thermischen und/oder mechanischen Invarianzeigenschaften gewährleistet.

Über diese Maßnahme ist es nunmehr möglich, dass im Messbetrieb mit Hilfe der Steuer- und Auswerteeinrichtung 85 nicht nur die räumliche Messkopf-Pose erfasst wird, sondern auch die räumlichen Posen der weiteren Empfangseinheiten 21.2. Vorausgesetzt sei hierbei, dass die Pose der willkürlich gewählten Empfangseinheit 21.1 bekannt ist, welche sich bezüglich des Bezugssystems bzw. Bezugspunkt B der Applikation, also z. B. dem Werkstücktisch 60 oder des Maschinenkoordinatensystems, in Ruhe befindet.

Analog zum oben erläuterten Vorgehen bei der Messung der Messkopf-Pose werden zusätzlich zu den Sendeeinheit-Markierungselementen 12.1 - 12.3 die der weiteren Empfangseinheit 20.2 zugeordneten Empfangseinheit-Markierungselemente 22.2a - 22.2c mit Hilfe der Steuer- und Auswerteeinrichtung 85 sequentiell aktiviert und die jeweils zwei Winkelmesswerte für alle jeweils empfangenden Empfangseinheiten und den jeweils aktiven Empfangseinheit-Markierungselementen 22.2a - 22.2c an der weiteren Empfangseinheit 20.2 bestimmt. Ergänzend können in analoger Art und Weise auch die Empfangseinheit-Markierungselemente 22.1a - 22.1c der ersten Empfangseinheit 21.1 über die zweite Empfangseinheit 21.2 erfasst werden. Stehen genügend gültige Messungen zur Verfügung, kann auf diese Art und Weise sowohl die jeweilige Pose der weiteren Empfangseinheit 20.2 als auch die Messkopf-Pose bestimmt werden. Eventuelle räumliche Verlagerungen der weiteren Empfangseinheiten 21.2 können somit bei der Bestimmung der räumlichen Messkopf-Pose kompensiert werden, es resultiert eine erhöhte Genauigkeit bei der Bestimmung der Messkopf-Pose relativ zum zu vermessenden Werkstück 65 und damit bei der Vermessung des Werkstücks 65 mit Hilfe des Messkopfs 10.

Zur gegenseitigen Posenerfassung der verschiedenen Empfangseinheiten 21.1, 21.2 sollte mindestens ein, bevorzugt drei Empfangseinheit-Markierungselemente 22.1a - 22.1c bzw. 22.2a - 22.2c der detektierten Empfangseinheit 21.1, 21.2 von der messenden Empfangseinheit 21.1, 21.2 erfasst werden, um eine vollständige Bestimmung der jeweiligen Empfangseinheit-Pose zu gewährleisten.

Selbstverständlich kann eine derartige messtechnische Erfassung von Verlagerungen der Empfangseinheiten auch ausgehend von einer anderen Empfangseinheit erfolgen, sofern deren Pose bekannt ist bzw. sich diese Empfangseinheit bezüglich des applikationsspezifischen Bezugssystems, d.h. bezüglich des Maschinenkoordinatensystems oder bezüglich des Werkstücktisches 65 in Ruhe befindet bzw. mit dem Werkstücktisch 65 bewegt wird.

Über das erläuterte Vorgehen ist demzufolge eine gegenseitige Erfassung der Posen der verschiedenen Empfangseinheiten und damit das Aufspannen eines virtuellen Metrologie-Rahmens zur Erfassung des Messkopfs 10 möglich. Dabei ist gewährleistet, dass auch eventuelle Verlagerungen der Empfangseinheiten 21.1, 21.2 bei der Messung berücksichtigt werden, die thermisch und/oder mechanisch bedingt auftreten können.

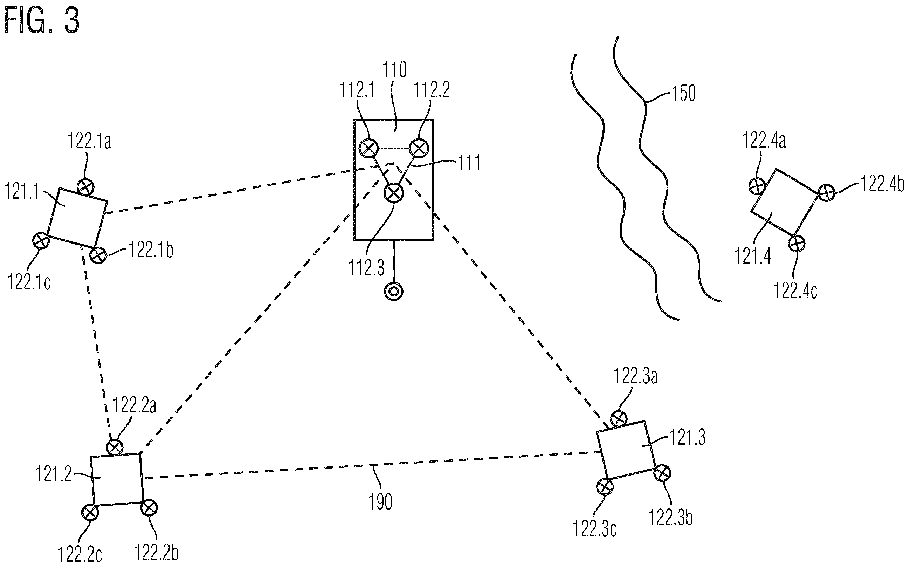

Der Fall der Verwendung von mehr als zwei Empfangseinheiten zur Erfassung der Pose eines Messkopfs ist in Figur 3 schematisch dargestellt. Dies kann beispielsweise erforderlich sein, wenn im Messbetrieb aufgrund der mechanischen Gegebenheiten einzelne Sichtverbindungen unterbrochen werden und deshalb mit der Minimalkonfiguration von zwei Empfangseinheiten aufgrund der verfügbaren Informationen keine Bestimmung der Messkopf-Pose möglich ist. Dies kann durch Abschattungen einzelner Sichtverbindungen über eingeschwenkte Maschinenkomponenten oder dergleichen verursacht werden. So sind in der Variante gemäß Figur 3 insgesamt vier als Empfangseinheiten 121.1 - 121.4 ausgebildete Positionsbestimmungsmodule vorgesehen, die jeweils wiederum drei Empfangseinheit-Markierungselemente 122.1a - 122.1c, 122.2a - 122.2c, 122.3a - 122.3c, 122.4a - 122.4c aufweisen. Am Messkopf 110 ist ein als Sendeeinheit 111 ausgebildetes Positionsbestimmungsmodul mit drei Sendeeinheit-Markierungselementen 112.1 - 112.3 angeordnet. Strichliniert sind analog zur Figur 1 die Sichtverbindungen bzw. Sichtlinien zwischen den Empfangseinheiten 121.1 - 121.3 und der Sendeeinheit 111 am Messkopf 110 angedeutet. In der dargestellten Messsituation liegt somit ein geschlossenes Netz 190 mit Sichtverbindungen zwischen den drei Empfangseinheiten 121.1 - 121.3 untereinander sowie Sichtverbindungen zwischen der Sendeeinheit 111 und den einzelnen Empfangseinheiten 121.1 - 121.3 vor. Die Sichtverbindung der vierten Empfangseinheit 121.4 zu den anderen Empfangseinheiten 121.1 - 121.3 und/oder zur Sendeeinheit 111 ist in der aktuellen Messsituation durch ein Hindernis 150 blockiert. Das zur Posenerfassung vorzugsweise erforderliche geschlossene Netz 190, welches mindestens zwei Empfangseinheiten 121.1 - 121.3 und die Sendeeinheit 111 untereinander verbindet, wird in dieser Messsituation demzufolge durch die drei Empfangseinheiten 121.1 - 121.3 und die Sendeeinheit 111 aufgespannt. Die vierte Empfangseinheit 121.4, deren Sichtverbindung zu anderen Empfangseinheiten 121.1 - 121.3 und/oder zur Sendeeinheit 111 gerade blockiert ist, wird nicht zur Posenbestimmung herangezogen.

Um die gegenseitige Erfassung von Posen wie vorstehend beschrieben zu ermöglichen, sollte in Bezug auf die erforderliche Sichtverbindung zwischen den verschiedenen Empfangseinheiten grundsätzlich gewährleistet sein, dass die Empfangseinheiten derart zueinander angeordnet sind, dass der Detektor jeder Empfangseinheit unter Berücksichtigung des räumlichen Detektor-Empfangswinkels im Bereich der räumlichen Emissionswinkel von mindestens drei Empfangseinheit-Markierungselementen der mindestens einen anderen Empfangseinheiten platziert ist. In den Figuren 2a - 2d ist dieser Zusammenhang in zweidimensionalen Darstellungen prinzipiell angedeutet, wobei die in diesen Figuren dem Detektor 23.1 zugeordneten Empfangswinkel α, β sowie die dem Empfangseinheit-Markierungselement 22.2a zugeordneten Emissionswinkel γ, δ den Azimut- bzw. Elevationswinkel in der jeweiligen Ebene angeben. Somit definieren die Empfangswinkel α, β die Winkellage des Empfangseinheit-Markierungselements 22.2a relativ zur erfassenden Empfangseinheit 12.1; die Emissionswinkel γ, δ definieren analog die Winkellage der erfassenden Empfangseinheit 21.1 relativ zum gemessenen Empfangseinheit-Markierungselement 22.2a.

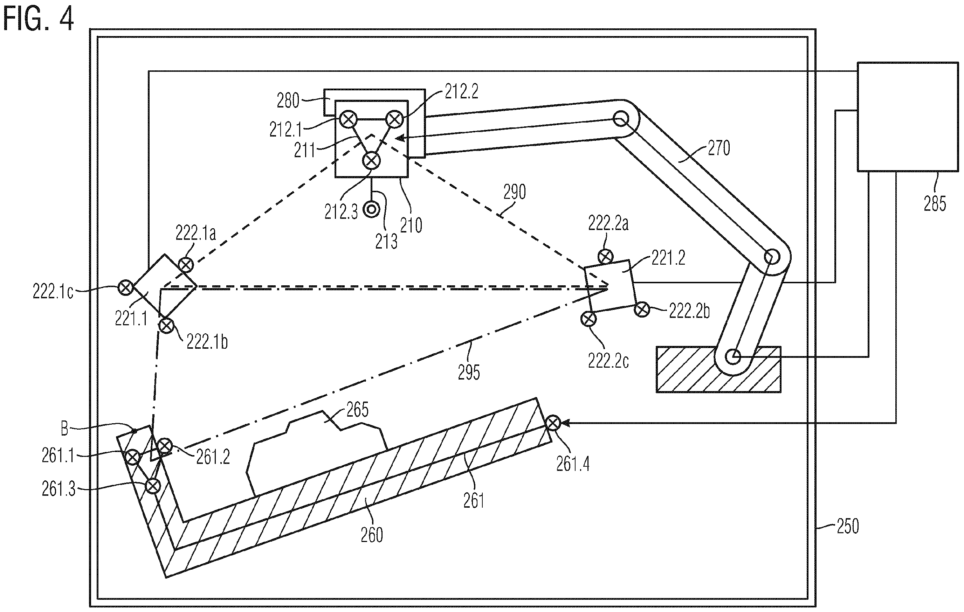

Im erläuterten Ausführungsbeispiel der Figur 1 mit lediglich zwei Empfangseinheiten 21.1, 21.2 ist eine starre Anordnung der ersten Empfangseinheit 21.1 am Werkstücktisch 60 bzw. Bezugspunkt vorgesehen. Damit ist gleichzeitig ein starrer Bezug der ersten Empfangseinheit 21.1 zum Werkstück 65 auf dem Werkstücktisch 60 gegeben, das mit Hilfe des Messkopfs 10 vermessen werden soll. Sollte abweichend hiervon die Pose der willkürlich gewählten, ersten Empfangseinheit relativ zum Werkstück-Koordinatensystem nicht bekannt sein, so sind zusätzliche Maßnahmen erforderlich, damit ein räumlicher Bezug zwischen dieser Empfangseinheit und dem Werkstück hergestellt werden kann. Dieser Fall wird anhand der Figur 4 im folgenden näher erläutert. Die Darstellung zeigt analog zu Figur 1 wiederum einen Messkopf 210, der über eine Kinematik 270 im Bearbeitungsraum einer Werkzeugmaschine positionierbar ist, um dort ein auf einem Werkstücktisch 260 aufgespanntes Werkstück 265 zu vermessen; mit dem Bezugszeichen 250 wird der schematisch angedeutete Maschinenrahmen bezeichnet. Zur Positionserfassungseinrichtung gehört wie im obigen Beispiel die Sendeeinheit 211 am Messkopf 210 mit drei Sendeeinheit-Markierungselementen 212.1 - 212.3. Ferner weist die Positionserfassungseinrichtung zwei Empfangseinheiten 221.1, 221.2 auf; keine dieser beiden Empfangseinheiten 221.1, 221.2 ist im Unterschied zum ersten Ausführungsbeispiel aber starr mit dem Werkstücktisch 260 bzw. dem darauf angeordneten Werkstück 265 verbunden. Dies bedeutet, dass ein Bezug mindestens einer Empfangseinheit 221.1, 221.2 zum Werkstücktisch 260 bzw. Werkstück 265 mangels vorhandener, starrer mechanischer Kopplung anderweitig hergestellt werden muss. Dies erfolgt im dargestellten Beispiel mit Hilfe eines weiteren Positionsbestimmungsmoduls 261 in Form einer Sendeeinheit am Werkstücktisch 260, die insgesamt vier Sendeeinheit-Markierungselemente 261.1 - 261.4 aufweist. Hierbei handelt es sich um insgesamt vier identifizierbare Lichtquellen, die starr am Werkstücktisch 260 angeordnet sind und deren räumliche Posen mit Hilfe der beiden Empfangseinheiten 221.1, 221.2 messtechnisch erfassbar sind. In einer Minimalkonfiguration wäre eine Sendeeinheit mit mindestens drei Sendeeinheit-Markierungselementen erforderlich, die auf diese Art und Weise starr mit dem Werkstück gekoppelt sind. Die Identifikation der Lichtquellen kann beispielsweise über eine selektive Aktivierung durch die Steuer- und Auswerteeinrichtung 285 erfolgen; analog zum ersten Beispiel sind hier aber auch andere Methoden denkbar.

Wie im ersten Beispiel existieren auch in der dargestellten Variante in Figur 4 somit zwei zusammenhängende Ketten von Sichtverbindungen zwischen dem mindestens einen Positionsbestimmungsmodul am Messkopf 210 und dem mindestens einen Positionsbestimmungsmodul am Bezugspunkt B. Diese Ketten von Sichtverbindungen sind darüber hinaus durch mindestens eine Sichtverbindung miteinander verbunden, welche zwischen Positionsbestimmungsmodulen vorliegt, die jeweils zwischen dem Messkopf 210 und dem Bezugspunkt B angeordnet sind. Bei der letztgenannten Sichtverbindung handelt es sich in diesem Beispiel um die Sichtverbindung zwischen der ersten und zweiten Empfangseinheit 221.1, 221.2.

Analog zum Beispiel in Figur 1 entsteht durch die zwei verbundenen Ketten von Sichtverbindungen ein geschlossenes Netz 290 aus Sichtverbindungen zwischen den Empfangseinheiten 221.1, 221.2 untereinander sowie Sichtverbindungen zwischen den Empfangseinheiten 221.1, 221.2 und der Sendeeinheit 211 am Messkopf 210 aufgespannt; dieses Netz 290 sei nachfolgend als erstes Netz bezeichnet. Darüber hinaus liegt hier ein weiteres Netz 295 aus Sichtverbindungen zwischen den beiden Empfangseinheiten 221.1, 221.2 und den Sendeeinheit-Markierungselementen 261.1 - 261.4 am Werkstücktisch 260 vor, welches nachfolgend als zweites Netz 295 bezeichnet sei. Im Messbetrieb wird über kontinuierlich erfolgende, identifizierbare Messungen entlang der Sichtlinien der beiden Netze 290, 295 laufend die räumliche Pose des Messkopfs 210 zum Werkstücktisch 260 als Bezugspunkt und damit zum Werkstück 265 ermittelt.

Neben dem erläuterten Ausführungsbeispiel existieren im Rahmen der vorliegenden Erfindung selbstverständlich noch weitere Ausgestaltungsmöglichkeiten.

So ist es etwa möglich, das in Figur 4 gezeigte Ausführungsbeispiel mit den zusätzlichen Werkstücktisch-Markierungselementen dahingehend abzuwandeln, dass anstelle von selektiv aktivierbaren Lichtquellen passive Markierungselemente verwendet werden. Hierzu können z.B. fluoreszierende Markierungselemente eingesetzt werden, die mit Hilfe von ein oder mehreren Lichtquellen selektiv aktiviert werden, um die entsprechenden Messungen mit den Empfangseinheiten vorzunehmen. Am Werkstücktisch müssen in diesem Fall keine aktiven Lichtquellen mit einer entsprechenden Stromversorgung angeordnet werden.

Desweiteren kann die erfindungsgemäße Vermessungsvorrichtung nicht nur in Werkzeugmaschinen eingesetzt werden, auch die Verwendung in anderen Maschinen oder aber Koordinatenmessgeräten mit anderen Kinematiken ist möglich. Hierbei kann der Messkopf z.B. an einem Endeffektor der Maschinenkinematik angeordnet sein, wobei mit dem Messkopf die Abweichung der tatsächlichen Position des Endeffektors zur eingestellten Sollposition vermessbar ist. Mindestens eine Empfangseinheit ist dann wiederum am Maschinenrahmen der Maschine oder an einem Werkstücktisch angeordnet.

## Patentansprüche

1. Vermessungsvorrichtung mit
- einem im Raum beweglichen Messkopf (10; 110; 210) und
- einer optischen Positionserfassungseinrichtung zur Bestimmung der räumlichen Position und Orientierung des Messkopfs (10; 110; 210) gegenüber einem Bezugspunkt (B),
**dadurch gekennzeichnet,**
- **dass** die Positionserfassungseinrichtung mindestens drei Positionsbestimmungsmodule umfasst, die als Sendeeinheit oder als Empfangseinheit ausgebildet sind, wobei mindestens ein Positionsbestimmungsmodul am Messkopf (10; 110; 210) und mindestens ein Positionsbestimmungsmodul am Bezugspunkt (B) angeordnet und mindestens ein Positionsbestimmungsmodul als Empfangseinheit ausgebildet ist und
- **dass** eine Sendeeinheit mindestens ein Sendeeinheit-Markierungselement (12.1 - 12.3; 112.1 - 112.3; 212.1 - 212.3) aufweist und
- **dass** eine Empfangseinheit mindestens einen optoelektronischen Detektor (23.1) sowie mindestens ein Empfangseinheit-Markierungselement (22.1a - 22.1c, 22.2a - 22.2c; 122.1a - 122.1c, 122.2a - 122.2c, 122.3a - 122.3c; 222.1a - 222.1c, 222.2a - 222.2c) umfasst, das in einer definierten räumlichen Beziehung zum optoelektronischen Detektor (23.1) angeordnet ist und
- **dass** Sichtverbindungen zwischen mindestens einem Teil der Positionsbestimmungsmodule bestehen und
- **dass** das mindestens eine Positionsbestimmungsmodul am Messkopf (10; 110; 210) und das mindestens eine Positionsbestimmungsmodul am Bezugspunkt (B) durch mindestens eine zusammenhängende Kette von Sichtverbindungen verbunden sind.

2. Vermessungsvorrichtung nach Anspruch 1, **dadurch gekennzeichnet, dass** mindestens zwei zusammenhängende Ketten von Sichtverbindungen zwischen dem mindestens einen Positionsbestimmungsmodul am Messkopf (10; 110; 210) und dem mindestens einen Positionsbestimmungsmodul am Bezugspunkt (B) existieren, wobei diese Ketten von Sichtverbindungen durch mindestens eine Sichtverbindung miteinander verbunden sind, die zwischen Positionsbestimmungsmodulen vorliegt, die jeweils zwischen dem Messkopf (10; 110; 210) und dem Bezugspunkt (B) angeordnet sind.

3. Vermessungsvorrichtung nach Anspruch 1 oder 2, **dadurch gekennzeichnet, dass** nur in einem ersten Teil des Messbereichs der Vermessungsvorrichtung mehr als zwei zusammenhängende Ketten von Sichtverbindungen vorliegen und in weiteren zweiten Teilen des Messbereichs jeweils nur eine zusammenhängende Kette von Sichtverbindungen vorliegt.

4. Vermessungsvorrichtung nach Anspruch 1, **dadurch gekennzeichnet, dass** die optoelektronischen Detektoren (23.1) der Empfangseinheiten mit dem mindestens einen Empfangseinheit-Markierungselement (22.1a - 22.1c, 22.2a - 22.2c; 122.1a - 122.1c, 122.2a - 122.2c, 122.3a - 122.3c; 222.1a - 222.1c, 222.2a - 222.2c) über einen Trägerrahmen (25.1) thermisch und/oder mechanisch invariant verbunden sind.

5. Vermessungsvorrichtung nach Anspruch 1, **dadurch gekennzeichnet, dass** dem optoelektronischen Detektor (21.1, 21.2; 121.1 - 121.4; 221.1, 221.2) in den Empfangseinheiten jeweils mindestens ein Abtastgitter (24.1) vorgeordnet ist.

6. Vermessungsvorrichtung nach mindestens einem der vorhergehenden Ansprüche, **dadurch gekennzeichnet, dass** das mindestens eine Sendeeinheit-Markierungselement (12.1 - 12.3; 112.1 - 112.3; 212.1 - 212.3) und/oder das mindestens eine Empfangseinheit-Markierungselement (22.1a - 22.1c, 22.2a - 22.2c; 122.1a - 122.1c, 122.2a - 122.2c, 122.3a - 122.3c; 222.1a - 222.1c, 222.2a - 222.2c) identifizierbar ausgebildet sind.

7. Vermessungsvorrichtung nach Anspruch 6, **dadurch gekennzeichnet, dass** das mindestens eine Sendeeinheit-Markierungselement (12.1 - 12.3; 112.1 - 112.3; 212.1 - 212.3) und/oder das mindestens eine Empfangseinheit-Markierungselement (22.1a - 22.1c, 22.2a - 22.2c; 122.1a - 122.1c, 122.2a - 122.2c, 122.3a - 122.3c; 222.1a - 222.1c, 222.2a - 222.2c) als Lichtquellen ausgebildet sind.

8. Vermessungsvorrichtung nach Anspruch 7, **dadurch gekennzeichnet, dass** die Lichtquellen zur Identifikation über eine Steuer- und Auswerteeinrichtung (85; 285) zeitlich selektiv aktivierbar sind.

9. Vermessungsvorrichtung nach Anspruch 7, **dadurch gekennzeichnet, dass** eine Steuer- und Auswerteeinrichtung (85; 285) dazu ausgebildet und eingerichtet ist, aus der Lage eines auf dem optoelektronischen Detektor (23.1) einer Empfangseinheit resultierenden Streifenmusters die Winkellage einer gemessenen Lichtquelle relativ zur Empfangseinheit zu bestimmen, so dass über die Identifikation des mindestens einen Sendeeinheit-Markierungselements (12.1 - 12.3; 112.1 - 112.3; 212.1 - 212.3) und/oder des mindestens einen Empfangseinheit-Markierungselements (22.1a - 22.1c, 22.2a - 22.2c; 122.1a - 122.1c, 122.2a - 122.2c, 122.3a - 122.3c; 222.1a - 222.1c, 222.2a - 222.2c) die räumliche Pose des Messkopfs (10; 110; 210) sowie mindestens zweier Positionsbestimmungsmodule relativ zum Bezugspunkt (B) bestimmbar ist.

10. Vermessungsvorrichtung nach Anspruch 6, **dadurch gekennzeichnet dass** eine Steuer- und Auswerteeinrichtung (85; 285) dazu ausgebildet und eingerichtet ist, sowohl die räumliche Pose des Messkopfs (10; 110; 210) als auch die räumlichen Posen der Positionsbestimmungsmodule zueinander zu bestimmen.

11. Vermessungsvorrichtung nach mindestens einem der vorhergehenden Ansprüche, **dadurch gekennzeichnet,**
- **dass** jede Sendeeinheit mindestens drei Sendeeinheit-Markierungselemente (12.1 - 12.3; 112.1 - 112.3; 212.1 - 212.3) umfasst und
- **dass** jede Empfangseinheit mindestens drei Empfangseinheit-Markierungselemente (22.1a - 22.1c, 22.2a - 22.2c; 122.1a - 122.1c, 122.2a - 122.2c, 122.3a - 122.3c; 222.1a - 222.1c, 222.2a - 222.2c) umfasst.

12. Werkzeugmaschine mit einer Vermessungsvorrichtung nach mindestens einem der vorhergehenden Ansprüche, **dadurch gekennzeichnet,**
- **dass** der Messkopf (10; 110; 210) in einer Werkzeugaufnahme (80; 280) der Werkzeugmaschine angeordnet ist, wobei mit dem Messkopf (10; 110; 210) ein auf einem Werkstücktisch (60; 260) der Werkzeugmaschine angeordnetes Werkstück (65; 265) vermessbar ist und
- **dass** mindestens ein Positionsbestimmungsmodul am Maschinenrahmen (50) der Werkzeugmaschine oder am Werkstücktisch (60; 260) angeordnet ist.

13. Werkzeugmaschine nach Anspruch 12, **dadurch gekennzeichnet, dass** der Messkopf (10; 110; 210) als Taster ausgebildet ist.

14. Werkzeugmaschine nach Anspruch 12, **dadurch gekennzeichnet, dass** am Werkstücktisch (260) ein Positionsbestimmungsmodul angeordnet ist, das als Sendeeinheit mit mindestens drei identifizierbaren Sendeeinheit-Markierungselementen (261.1 - 261.4) ausgebildet ist.

15. Maschine mit einer Vermessungsvorrichtung nach mindestens einem der Ansprüche 1 - 11, **dadurch gekennzeichnet,**
- **dass** der Messkopf an einem Endeffektor einer Maschinenkinematik angeordnet ist, wobei mit dem Messkopf die Abweichung der tatsächlichen Position des Endeffektors zur eingestellten Sollposition vermessbar ist und
- **dass** mindestens ein Positionsbestimmungsmodul am Maschinenrahmen der Maschine oder an einem Werkstücktisch angeordnet ist.
